# EUROPEAN PATENT APPLICATION

(11) **EP 2 505 553 A1**
(43) Date of publication of application: **03.10.2012**
(21) Application number: 10832963.2
(22) Date of filing: 22.09.2010
(51) Int. Cl.: C01B 31/02

(54) **CARBON MATERIAL AND PROCESS FOR PRODUCTION THEREOF**

(30) Priority: 25.11.2009 JP 2009266985
(71) Applicant: Toyo Tanso Co., Ltd., Osaka-shi Osaka 555-0011 (JP)
(72) Inventor: ISHII, Takugo, Osaka-shi Osaka 555-0011 (JP); SETANI, Kaoru, Kanonji-shi Kagawa 769-1612 (JP); MATSUNAGA, Hiroaki, Kanonji-shi Kagawa 769-1612 (JP); TAKEDA, Akiyoshi, Kanonji-shi Kagawa 769-1612 (JP)
(74) Representative: Glawe, Delfs, Moll
(86) International application number: PCT/JP2010/066392
(87) International publication number: WO 2011/065116

(57) **Abstract**

When treated with a halogen gas, a carbon material can inhibit emission of an impurity after the treatment. A method of manufacturing the carbon material is also provided.

A carbon material is subjected to an annealing process under a reduced pressure of from 1 to 10000 Pa in a H₂ gas atmosphere at 500°C to 1200°C. The duration of the annealing process is from 1 minute to 20 hours. This makes it possible to control the concentration of the halogen emitted, such as chlorine, to 5 ppb or less.

## Description

### TECHNICAL FIELD

The present invention relates to a carbon material and a method of manufacturing the same. More particularly, the invention relates to a carbon material that is surface-reformed and inhibited from emitting impurities, and a method of manufacturing the same.

### BACKGROUND ART

Carbon materials are light in weight and excellent in chemical and thermal stability and have good thermal conductivity and electrical conductivity even though they are nonmetals. On the other hand, a problem with the carbon material is that they produce dust, so it is necessary to form a coating layer on the surface to prevent dust emission. However, when a layer of a material other than carbon is formed on a carbon material, the problem of poor adhesivity between the carbon material and the layer of the other material arises. In view of such a problem, it has been proposed, for example, that a chromium carbide layer composed of Cr₂₃C₆ is provided on the surface by treating a carbon substrate with a chromium halide gas, and the chromium carbide layer is coated with a metal by thermal spraying (see Patent Documents I and 2).

However, when the carbon material, is treated with a halogen-based gas using such above-mentioned conventional methods, the treated carbon material may contain impurities. As a consequence, problems arise when the carbon material is used, for example, in the field of semiconductor. For example, when a carbon material treated using chlorine as the halogen-based gas is used in manufacturing semiconductors using aluminum, corrosion of aluminum may be caused. Moreover, when such a material that its performance is affected by the treatment environment is used in semiconductor and other applications, failures may arise from impurities produced from members surrounding the processing equipment, so there is a strong demand for a material that does not emit chlorine, which has high reactivity.

### CITATION LIST

### Patent Documents

[Patent Document 1] Japanese Unexamined Patent Publication No. 8-143384
[Patent Document 2] Japanese Unexamined Patent Publication No. 8-143385

### SUMMARY OF THE INVENTION

### TECHNICAL PROBLEM

The present invention has been accomplished in view of the foregoing problems, and an object of the present invention is to provide a method of manufacturing a carbon material that can inhibit impurities (halogen) from existing after the treatment in which the material is treated with a halogen gas, and to provide the carbon material.

### SOLUTION TO PROBLEM

In order to accomplish the foregoing object, the present invention provides a carbon material characterized in that the concentration of chlorine emitted from the carbon material is 5 ppb or less.
When the concentration of the emitted chlorine is 5 ppb or less, it is possible to prevent the problem of corrosion of aluminum, for example, in the case where the carbon material is used in manufacturing semiconductors using aluminium. Moreover, it is possible to prevent contamination of the surrounding environment. As a result, the carbon material of the present invention can suitably be used, for example, in the field of semiconductors.
The just-mentioned concentration of chlorine may be determined by immersing a carbon material (sample size 2 mm × 3.5 mm × 50 mm) in water (100 mL) for a predetermined time (24 hours) and determining the concentration of chlorine emitted therefrom by ion chromatography. The concentration of chlorine may alternatively be determined by introducing the gas emitted from a carbon material (sample size 2 mm × 3 mm × 30 mm) that is irradiated with a ray of energy (a laser beam having a wavelength of 193 nm) into pure water (160 mL) to extract ions, and determining the concentration of chlorine by ion chromatography.

It is desirable that a layer of a transition metal carbide (metal carbide layer) be formed on a surface thereof.
It is efficient to use a hydrogen chloride gas when forming a layer of a transition metal carbide. However, if the layer of the transition metal carbide is formed in such a manufacturing method, chlorine tends to remain in the carbon material, so it becomes difficult to use the carbon material as a material for manufacturing semiconductors. Nevertheless, even in the case where the layer of the transition metal carbide is formed by such a method, the carbon material can be used as a material for manufacturing semiconductors as long as the chlorine concentration is 5 ppb or less. It is more preferable that the chlorine concentration be 0.5 ppb or less.

The invention also provides a method of manufacturing a carbon material, characterized by comprising subjecting a carbon substrate to an annealing process in a reducing gas atmosphere at from 500°C to 1200°C.
By annealing a carbon material in a reducing gas atmosphere, the concentration of halogen emitted from the carbon material can be reduced. Moreover, dust emission of the carbon material can be inhibited. Furthermore, the carbon material can be inhibited from deforming even when, for example, the carbon material is machine-processed, and the flatness can be improved.

Here, the temperature in the annealing process is restricted to from 500°C to 1200°C for the following reason. If the temperature is less than 500°C, the effect of reducing halogen emission cannot be obtained. On the other hand, if the temperature exceeds 1200°C, the effect of reducing halogen emission cannot be any greater, but the energy loss becomes greater, increasing the manufacturing cost of the carbon material. In order to sufficiently obtain the effect of reducing halogen emission, it is preferable that the temperature be 800°C or higher.

It is desirable that the annealing process be conducted under reduced pressure, and the pressure be from 1 to 10000 Pa.
The reason is that, if the pressure is higher than 10000 Pa or less than 1 Pa, the costs of the equipment and the gas used for the treatment will be too high, so it is impracticable. In addition, it is preferable that the pressure be within the range of from 10 to 1000 Pa, because the structure of the equipment can be made simple and at the same time the effect of reducing halogen emission can sufficiently be obtained.

It is desirable that the duration of the annealing process be from 1 minute to 20 hours.
The reason is as follows. If the duration of the annealing process is less than 1 minute, the effects of reducing halogen emission and improving flatness cannot sufficiently be obtained. On the other hand, even if the duration exceeds 20 hours, the effects of reducing halogen emission and improving flatness cannot be any greater. From these viewpoints and the viewpoint of preventing energy loss, it is especially preferable that the duration of the annealing process be from 5 to 10 hours.

### ADVANTAGEOUS EFFECTS OF INVENTION

The present invention makes it possible to inhibit impurities (halogen) from existing after the treatment even when the carbon material is treated with a halogen gas and at the same time to inhibit dust emission of the carbon material. Moreover, the invention makes it possible to improve the flatness of the carbon material irrespective of the shape of the carbon material.

### DESCRIPTION OF DRAWING

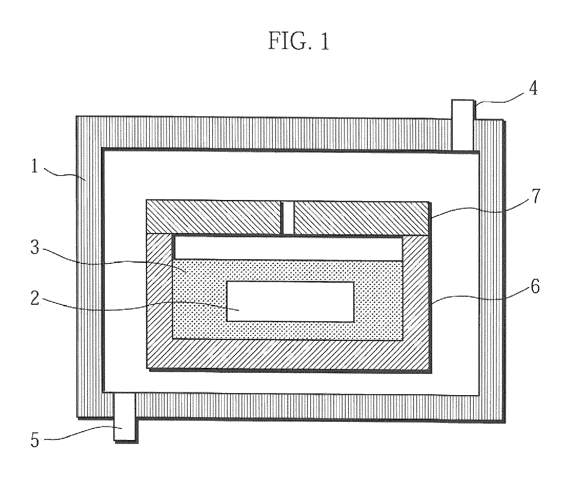

[Fig. 1] Fig. 1 shows a diagram of an apparatus used in the method of manufacturing a carbon material described in the present invention.

### DESCRIPTION OF EMBODIMENTS

Hereinbelow, the present invention will be described in detail.
A feature of the present invention is that a carbon material is annealed in a reducing gas atmosphere at from 500°C to 1200°C. Moreover, as described above, it is desirable that the annealing process be conducted under a reduced pressure ranging from 1 to 10000 Pa. In addition, it is desirable that the duration of the annealing process be from 1 minute to 20 hours. Hereinbelow, an unannealed carbon material will be described in detail.

The above-written carbon material (unannealed carbon material) may be produced by, for example, heat-treating a carbon substrate together with a carbon member other than the carbon substrate, the carbon substrate embedded in a surface modifying agent (in a powdery state) comprising a pyrolytic hydrogen halide generating agent and metal particles containing a transition metal.
Examples of the carbon member include a container made of carbon, such as a graphite crucible, and carbon powder. By heat-treating the carbon substrate to be treated together with the carbon member in this way, a metal carbide layer can be formed on the carbon substrate in a short time.

With the heat treatment time for less than 1 hour, the metal carbide layer can be formed without color unevenness and substantially uniformly on the carbon substrate. This metal carbide layer can sufficiently be formed with a treatment time of 30 minutes. The treatment time may be longer, for example, 1 hour or longer, if the metal carbide layer needs to be thicker. It is preferable that the heat treatment be performed at from 800°C to 1200°C. By treating within this temperature range, the carbon substrate can be treated efficiently.

It is preferable that the heat treatment be performed under normal pressure. Since the treatment can be performed under normal pressure, the equipment such as a vacuum pump is unnecessary, and the time required for reducing the pressure is also unnecessary. As a result, the treatment process becomes simpler, and the treatment time reduces.

Hereinbelow, the components and members used in the present invention will be shown as one example.
Examples of the carbon substrate include, but not particularly limited to, isotropic graphite materials, anisotropic graphite materials, and carbon fiber materials. It is preferable that the carbon substrate have a bulk density of from 1.0 g/cm³ to 2.1 g/cm³ and a porosity of 40% or less.

The pyrolytic hydrogen halide generating agent is such that is kept in a solid state under room temperature and normal pressure but is decomposed by heating to generate a hydrogen halide such as hydrogen chloride, hydrogen fluoride, and hydrogen bromide. It is preferable that the heat decomposition temperature of the pyrolytic hydrogen halide generating agent be 200°C or higher, so that the handling before the heating can be easy. The hydrogen halide generated from the pyrolytic hydrogen halide generating agent reacts with the transition metal during the heat treatment and produces a metal halide gas. By treating the carbon substrate with the metal halide gas, the metal carbide layer can be formed on the surface of the carbon substrate. Since the carbon substrate is treated with gas as described above, the metal carbide layer can be formed substantially uniformly on the carbon substrate even when the carbon substrate has a complicated shape with, for example, holes and grooves. It is preferable that the pyrolytic hydrogen halide generating agent be ammonium chloride from the viewpoint of availability.

It is sufficient that a transition metal is contained in the metal particles. Examples include a mixture powder of a transition metal and another metal, and an alloy powder of a transition metal and another metal. Examples of the transition metal include Ti, V, Cr, Mn, Fe, Co, Ni, Cu, Zn, Zr, Nb, Mo, and Ta, but the transition metal is not particularly limited as long as it reacts with the hydrogen halide and produces a metal halide gas. The produced metal halide gas reacts with the carbon in the surface of the carbon substrate and produces a metal carbide. It is preferable that Cr be contained in the transition metals from the viewpoint of its high reactivity. It is preferable that the metal particles be an alloy powder containing Cr, and an example is stainless steel.
Especially when using metal particles comprising stainless steel, which is an alloy containing Cr, Ni, and Fe, a layer containing Ni, Fe, and chromium carbide is formed at one time of the heat treatment.

Examples of the carbon member include a container made of carbon, such as a graphite crucible, and carbon powder.
With the use of the carbon member, the treatment time of the carbon substrate can be shortened, and the need of the hydrogen gas supply can be eliminated. As a result, the surface modification of the carbon substrate can be achieved in a simpler manner and more easily. This makes it possible to improve the adhesivity of the carbon substrate with a layer of a metal or the like that is to be later formed on the surface, and also to improve the strength of the resulting carbon material over the carbon substrate. Moreover, pressure reduction is not needed, and the heat treatment can be conducted under normal pressure (in an atmospheric pressure). Thus, the treatment can be conducted in a simple manner.

It is preferable that the carbon member be a graphite crucible. The use of a graphite crucible in the treatment makes it possible to suppress the flow of the gas around the embedded carbon substrate, and to form the metal carbide layer without color unevenness and more uniformly on the surface of the carbon substrate. Moreover, the gas produced from the powder can be kept in the graphite crucible to a certain degree, so the produced gas can be utilized effectively. It is preferable that a lid be placed on the graphite crucible, and the lid serves to further suppress the flow of the gas around the carbon substrate. Examples of the lid include one made of graphite, and a sheet made of graphite. In order to release the gas produced in the container, it is preferable that an air hole be provided in the container or in the lid. When using a sheet made of graphite, the air hole is not particularly necessary since the sheet merely covers the container.

When using carbon powder as the carbon member, it is recommended that the metal particles containing a transition metal, the pyrolytic hydrogen halide generating agent, and the carbon powder be filled in the container, then the carbon substrate be embedded in the powder filled in the container, and the carbon substrate be heat-treated. When using carbon powder as the carbon member, the container is not particularly limited. In the treatment, it is possible to suppress the flow of the gas in the container by, for example, putting a lid or a sheet made of graphite on the container. It is also possible to use the above-mentioned graphite crucible as the container.

As described above, an introduced gas is not directly blown into the container in which the carbon substrate is embedded. Conversely, if an attempt is made to carry out the treatment while introducing a hydrogen gas, it is difficult to efficiently perform the treatment using the hydrogen gas because the container, such as the graphite crucible, hinders the introduction of hydrogen gas.

Next, one example, of the apparatus used for the manufacture of the carbon material (unannealed carbon material) and for the annealing process will be described with reference to Fig. 1. The following is described about a case in which a graphite crucible is used as the carbon member in manufacturing the carbon material (unannealed carbon material).

### (1) When the apparatus is used for manufacturing the carbon material (unannealed carbon material)

The just-mentioned apparatus has a heating furnace 1 having a heater, and is configured to heat-treat a material to be treated, which is placed in the heating furnace 1. The heating furnace 1 is provided with a gas inlet port 4 and a gas exhaust port 5. The gas inlet port 4 is configured so that an inert gas such as nitrogen gas or argon gas can be introduced therefrom, while the gas exhaust port 5 is configured to naturally exhaust the inert gas or the like therefrom.

In the present apparatus, a graphite crucible 6 may be disposed in the heating furnace 1. The graphite crucible 6 is configured so that the powder 3 (surface modifying agent) can be filled in the graphite crucible 6, and a carbon substrate 2 to be treated can be embedded in the powder 3. The powder 3 contains a pyrolytic hydrogen halide generating agent and metal powder (metal particles) containing a transition metal. The graphite crucible 6 is configured to be closed by a lid 7, and the lid 7 has an air hole.

When the carbon material (unannealed carbon material) is manufactured with the above-described apparatus of Fig. 1, the powder 3 is filled in the graphite crucible 6, which is a carbon member, then the carbon substrate 2 is embedded in the powder 3 filled in the crucible, and the lid 7 is put thereon. Then, the graphite crucible 6 is placed in the apparatus and heated. Thus, the method of manufacturing the carbon material can be implemented.

### (2) When the apparatus is used for the annealing process

Hereinbelow, only the points that are different from the case where the apparatus is used for manufacturing the carbon material (unannealed carbon material) will be described.
When conducting the annealing process, the apparatus is configured as follows. A reducing gas such as H₂ gas can be introduced from the gas inlet port 4, while the gas exhaust port 5 is joined to a vacuum pump, which is not shown in the drawings, so that the pressure of the interior of the heating furnace 1 can be reduced. The carbon material (unannealed carbon material) is disposed on a support plate, which is disposed between it and the graphite crucible 6 and is made of a carbon material.

When the annealing process is performed with the above-described apparatus of Fig. 1, the carbon material is placed directly in the apparatus, and thereafter the apparatus is evacuated using a vacuum pump until the internal pressure of the apparatus becomes from 1 to 10000 Pa. Next, while introducing a reducing gas such as a H₂ gas from the gas inlet port 4, the internal temperature of the apparatus is elevated to from 500°C to 1200°C. This condition is kept for 1 minute to 20 hours, whereby the annealing process is implemented.

### (Other Embodiments)

(1) In the foregoing embodiment, the carbon material (unannealed carbon material) is produced by heat-treating a carbon substrate together with a carbon member other than the carbon substrate, the carbon substrate embedded in a surface modifying agent (in a powdery state) comprising a pyrolytic hydrogen halide generating agent and metal particles containing a transition metal. However, this is illustrative only, and the present invention can be of course applied to various carbon materials produced by any manufacturing method, including those shown in the foregoing Patent Documents 1 and 2.

### EXAMPLES

Hereinbelow, the present invention will be described in further detail based on examples thereof. However, the present invention is not limited thereto.

### <Example>

Using an apparatus shown in Fig. 1, a mixture powder of stainless steel powder (SUS 314 powder), ammonium chloride (NH₄Cl), and alumina powder (Al₂O₃) was filled in a graphite crucible (made by Toyo Tanso Co., Ltd, Model number IG-11), and a carbon substrate (high-density isotropic graphite formed by cold isotropic pressure: bulk density 1.8 g/cm³, average pore radius 5 µm, porosity 20%) was embedded in the mixture powder filled in the crucible. The crucible was closed with a lid and placed in the heating furnace, and a heat treatment was performed. When heating, nitrogen was introduced from the gas inlet port, and the gas was discharged naturally from the gas exhaust port. Thereby, a carbon material is produced. The temperature in the heat treatment was 1000°C, and the treatment duration was 3 0 minutes.

Next, using the same apparatus, the carbon material produced in the above-described manner was placed directly in the apparatus, and thereafter, the apparatus was evaluated using a vacuum pump until the pressure in the apparatus became 150 Pa. Next, while introducing a H₂ gas from the gas inlet port 4, the internal temperature of the apparatus was elevated to 1200°C, and this condition was kept for 20 hours, whereby the annealing process was conducted.
The carbon material fabricated in this manner is hereinafter referred to as the present invention material A.

### <Comparative Example>

A carbon material was fabricated in the same manner as described in Example above, except that the carbon material was not subjected to the annealing process.
The carbon material fabricated in this manner is hereinafter referred to as a comparative material Z.

### <experiment 1>

The concentrations of Cl⁻ ions emitted were determined for the present invention material A and the comparative material Z. The experiment was conducted as follows. Each sample (having a size of 2 mm × 3.5 mm × 50 mm) was immersed in 100 mL of ultrapure water (water temperature 60°C) having a purity of 18 MΩcm for 24 hours, and the resultant extract was analyzed by ion chromatography.

**TABLE 1**

| | Cl⁻ ion concentration |
|---|---|
| Present invention material A | Less than detection limit (0.5 ppb) |
| Comparative material Z | 1 ppm or higher |

As clearly seen from Table 1, it is observed that the present invention material A exhibited a remarkably lower concentration of the residual chlorine than the comparative material Z.
In addition, the present invention material A (sample size 2 mm × 3 mm × 30 mm) was irradiated with a laser beam having a wavelength of 193 nm with an energy amount of 20 mJ/cm², then the gas emitted therefrom was captured and introduced in 160 mL of ultrapure water, and the concentration of the ions dissolved therein was determined by an ion chromatography system ICS-3000 made by Dionex Corp. The results were as follows; the chlorine concentration was 0.23 ppt, the sulfur oxide SO₄²⁻ was 0.10 ppt, and NH₄⁺ was 3.5 ppt. In addition, as a reference, the emitted gas was adsorbed using Carbotrap 349, and the amount of carbon in the thermal desorbed gas was determined by GC/MS analysis, so that the concentration of organic substance was obtained. As a result, the concentration of organic substance was found to be 0.67 ppt. This demonstrates that almost no chlorine or other impurities is/are emitted from the present invention material A.

### <experiment 2>

To determined dust emission of the present invention material A and the comparative material Z, the existence of particles produced from the material surface was investigated. The results are shown in Table 2. The existence of particles was determined by a method of rubbing each sample with dust-free paper, and visually checking whether the dust-free paper changed to black in color, and a method of dropping each sample on a metal substrate and thereafter observing the metal substrate by oblique light.

**TABLE 2**

| | Color change of dust-free paper | Particle |
|---|---|---|
| Present invention material A | Not observed | Not observed |
| Comparative material Z | Observed | Observed |

As clearly seen from Table 2, it is observed that dust emission was inhibited for the present invention material A, because the dust-free paper did not change to black in color. On the other hand, it is observed that dust emission was not sufficiently inhibited for the comparative material Z, because the dust-free paper changed to black in color.

### <Experiment 3>

The amount of warpage was determined for the present invention material A and the comparative material Z. The results are shown in Table 3. The experiment was conducted as follows. Samples of the present invention material A (L1 = 150 mm, L2 = 122 mm, and thickness 3.5 mm) were analyzed by a three-dimensional shape measurement device (Quick Vision QVT202-PRO 6F made by Mitutoyo Corp.). More specifically, each sample was placed on a fixed plate, and the vertical position of the sample was measured about every 2.5 mm. Thereafter, the obtained vertical positions were converted into the values with respect to a virtual plane obtained by least squares approximation as the reference. Then, the difference f between the maximum and minimum values of the converted vertical positions at all the measured points was defined as the amount of warpage. The number of the samples was 5 for each material.

**TABLE 3**

| Sample No. | Amount of warpage (µm) | | | | | |
|---|---|---|---|---|---|---|
| | 1 | 2 | 3 | 4 | 5 | Average |
| Present invention material A | 34 | 29 | 39 | 41 | 37 | 36 |
| Comparative material Z | 60 | 60 | 81 | 66 | 79 | 69.2 |

As clearly seen from Table 3, it is observed that the present invention material A exhibited remarkably less warpage than the comparative material Z.

### INDUSTRIAL APPLICABILITY

The carbon material and the method of manufacturing the carbon material of the present invention can be used, for example, in the field of semiconductors.

### DESCRIPTION OF REFERENCE NUMERALS

- 1 --: Furnace
- 2 --: Carbon substrate
- 3 --: Powder
- 4 --: Gas inlet port
- 5 --: Gas exhaust port
- 6 --: Graphite crucible
- 7 --: Lid

## Claims

1. A carbon material **characterized in that** the concentration of chlorine emitted therefrom is 5 ppb or less.

2. The carbon material according to claim 1, wherein a layer of a transition metal carbide is formed on a surface thereof.

3. The carbon material according to claim 1 or 2, wherein:
the concentration of chlorine is a value determined by immersing a carbon material (sample size 2 mm × 3.5 mm × 50 mm) in water (100 mL) for a predetermined time (24 hours) and determining the concentration of chlorine emitted therefrom by ion chromatography, or
the concentration of chlorine is a value determined by introducing a gas emitted therefrom when a carbon material (sample size 2 mm × 3 mm × 30 mm) is irradiated with a ray of energy (a laser beam having a wavelength of 193 nm) into pure water (160 mL) to extract ions, and determining the concentration of chlorine by ion chromatography.

4. A method of manufacturing a carbon material, **characterized by** comprising subjecting a carbon substrate to an annealing process in a reducing gas atmosphere at from 500°C to 1200°C.

5. The method of manufacturing a carbon material according to claim 4, wherein the annealing process is conducted under reduced pressure, and the pressure is from, 1 to 10000 Pa.

6. The method of manufacturing a carbon material according to claim 4 or 5, wherein the duration of the annealing process is from 1 minute to 20 hours.
